(19) Europäisches Patentamt
European Patent Office
Office européen des brevets

(11) **EP 4 152 202 A1**

(12) **EUROPEAN PATENT APPLICATION**
published in accordance with Art. 153(4) EPC

(43) Date of publication:
**22.03.2023 Bulletin 2023/12**

(21) Application number: **21804247.1**

(22) Date of filing: **26.04.2021**

(51) International Patent Classification (IPC):
***G06F 40/169*** (2020.01)  ***G06F 40/279*** (2020.01)

(52) Cooperative Patent Classification (CPC):
**G06F 40/169; G06F 40/279**

(86) International application number:
**PCT/JP2021/016579**

(87) International publication number:
**WO 2021/230054 (18.11.2021 Gazette 2021/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.05.2020 JP 2020084442**

(71) Applicant: **Hitachi, Ltd.**
**Tokyo 100-8280 (JP)**

(72) Inventors:
• **IHARA, Hiroka**
**Tokyo 100-8280 (JP)**
• **SHIMADA, Akio**
**Tokyo 100-8280 (JP)**
• **HAYASAKA, Mitsuo**
**Tokyo 100-8280 (JP)**

(74) Representative: **Mewburn Ellis LLP**
**Aurora Building**
**Counterslip**
**Bristol BS1 6BX (GB)**

(54) **SENTENCE EXTRACTION DEVICE AND SENTENCE EXTRACTION METHOD**

(57)    Sentences associated with diagrams or tables are extracted in a wider range. In a sentence extracting device that includes a processor and extracts a sentence associated with a diagram or a table from a body of a digital document including the diagram or the table and the body, the diagram or the table includes a label, a caption, and a body. The processor includes extraction units 202 to 205 that extract, from the body, a sentence including a second word associated with a first word included in the body of the diagram or the table.

*FIG. 2*

## Description

Technical Field

The present invention relates to a sentence extracting device and a sentence extracting method.

Background Art

With the explosive increase in unstructured data, use cases of data analysis for extracting useful knowledge from enormous unstructured data are increasing. In particular, a digital document that is a representative unstructured data source includes a large number of charts, and by extracting and analyzing data from these charts, it is possible to extract high-value information.

An example of such a use case includes support for analysis of academic documents. When investigating academic documents such as patents and papers, it is required to efficiently understand charts included in a large amount of documents, but human information processing ability is limited. Therefore, by automatically extracting a chart from the document and presenting the chart to the person in charge of investigation, the investigation efficiency can be improved.

However, in the chart alone, there is a limit to the expressive power of information, and only limited information can be analyzed. Therefore, in addition to the chart body, it is required to extract an explanatory sentence of the chart from the document body and present the explanatory sentence together with the chart.

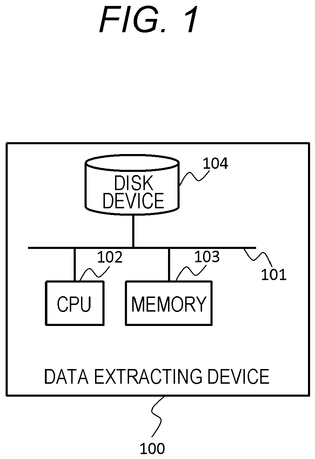

As a technique related to the present technology, for example, there is a chart explanatory sentence extracting device disclosed in PTL 1. The chart explanatory sentence extracting device disclosed in PTL 1 decomposes a document body into sentences, compares each sentence with a label/caption of a chart, and selects a sentence having similar word formation as a chart explanatory sentence. For example, a sentence including many words included in the label of the chart or the caption of the chart, such as "Table 1." or "FIG. 1", is likely to be suitable as an explanatory sentence of the chart.

Citation List

Patent Literature

PTL 1: JP 2003-346161 A

Summary of Invention

Technical Problem

However, the device disclosed in PTL 1 has two problems.

A first problem is that a sentence referring to information inside a chart cannot be extracted. For example, a sentence referring to a component name in a design drawing or a performance numerical value in a product specification table cannot be extracted by comparison with a label or a caption of a chart.

The second problem is that an important sentence cannot be extracted as an explanatory sentence unless a word directly associated with the chart is included. For example, a sentence referring to the contents of a chart using a pronoun such as "that" or "this" cannot be extracted only by focusing on the formation of a word.

In the device disclosed in PTL 1, due to these problems, only a limited range of explanatory sentences can be extracted, and as a result, data analysis is adversely affected.

The present invention has been made in view of the above problems, and an object of the present invention is to provide a sentence extracting device and a sentence extracting method capable of extracting sentences related to diagrams or tables in a wider range.

Solution to Problem

In order to solve the above problem, a sentence extracting device according to one aspect of the present invention is a sentence extracting device that includes a processor and extracts a sentence related to a diagram or a table from a body of a digital document including the diagram or the table and the body, wherein the diagram or table has a label, a caption, and a body, and the processor includes an extraction unit that extracts, from the body, the sentence including a second word associated with a first word included in a body of the diagram or the table.

Advantageous Effects of Invention

According to the present invention, it is possible to implement a sentence extracting device and a sentence extracting method capable of extracting sentences related to diagrams or tables in a wider range.

Brief Description of Drawings

[FIG. 1] FIG. 1 is a diagram illustrating a hardware configuration of a sentence extracting device according to an embodiment.
[FIG. 2] FIG. 2 is a diagram illustrating a logical configuration of a data extracting program in a memory of the sentence extracting device according to the embodiment.
[FIG. 3] FIG. 3 is a flowchart illustrating overall processing of the sentence extracting device according to the embodiment.

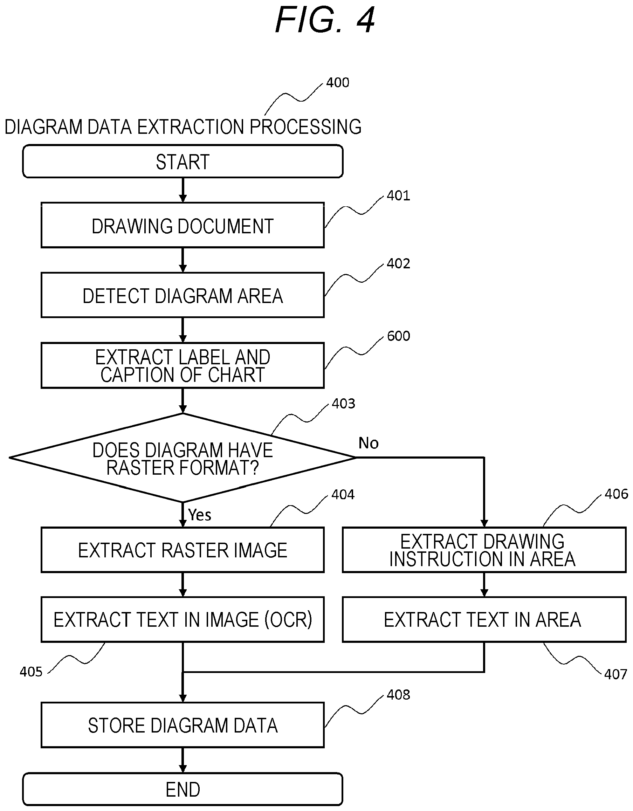

[FIG. 4] FIG. 4 is a flowchart illustrating diagram data extraction processing of the sentence extracting device according to the embodiment.
[FIG. 5] FIG. 5 is a diagram illustrating diagram data extraction processing of the sentence extracting device according to the embodiment.

[FIG. 6] FIG. 6 is a flowchart illustrating table data extraction processing of the sentence extracting device according to the embodiment.

[FIG. 7] FIG. 7 is a diagram illustrating table data extraction processing of the sentence extracting device according to the embodiment.

[FIG. 8] FIG. 8 is a flowchart illustrating chart label/caption row determination processing of the sentence extracting device according to the embodiment.

[FIG. 9] FIG. 9 is a diagram illustrating chart label/caption row determination processing of the sentence extracting device according to the embodiment.

[FIG. 10] FIG. 10 is a diagram illustrating chart label/caption row determination processing of the sentence extracting device according to the embodiment.

[FIG. 11] FIG. 11 is a flowchart illustrating body text paragraph division processing of the sentence extracting device according to the embodiment.

[FIG. 12] FIG. 12 is a flowchart illustrating word table (A) creation processing of the sentence extracting device according to the embodiment.

[FIG. 13] FIG. 13 is a diagram illustrating word table (A) creation processing of the sentence extracting device according to the embodiment.

[FIG. 14] FIG. 14 is a flowchart illustrating word table (B) creation processing of the sentence extracting device according to the embodiment.

[FIG. 15] FIG. 15 is a diagram illustrating word table (B) creation processing of the sentence extracting device according to the embodiment.

[FIG. 16] FIG. 16 is a flowchart illustrating score calculation processing of the sentence extracting device according to the embodiment.

[FIG. 17] FIG. 17 is a diagram illustrating score calculation processing of the sentence extracting device according to the embodiment.

[FIG. 18] FIG. 18 is a diagram illustrating score calculation processing of the sentence extracting device according to the embodiment.

[FIG. 19] FIG. 19 is a flowchart illustrating extraction target sentence determination processing of the sentence extracting device according to the embodiment.

[FIG. 20] FIG. 20 is a diagram illustrating extraction target sentence determination processing of the sentence extracting device according to the embodiment.

Description of Embodiments

Hereinafter, embodiments of the invention will be described with reference to the accompanying drawings. Further, the embodiments described below do not limit the claims of the invention. Not all the elements and combinations thereof described in the embodiments are essential to the solution of the invention.

Note that, in the drawings for describing the embodiments, portions having the same functions are denoted by the same reference numerals, and repeated description thereof will be omitted.

In the following description, an expression such as "xxx data" may be used as an example of the information, but the data structure of the information may be any structure. That is, in order to indicate that the information does not depend on the data structure, "xxx data" can be referred to as "xxx table". Further, "xxx data" may be simply referred to as "xxx". In the following description, the configuration of each piece of information is an example, and information may be divided and held, or may be combined and held.

In the following description, the process may be described with the "program" as the subject, but the program is executed by a processor (for example, a CPU (Central Processing Unit)) to appropriately perform the determined process while using a storage resource (for example, a memory) and/or a communication interface device (for example, a port). Therefore, the subject of the process may be the program. The process described with the program as the subject may be a process performed by a processor or a computer having the processor.

The sentence extracting device according to the present exemplary embodiment may have the following configuration as an example.

That is, the sentence extracting device of the present exemplary embodiment solves the problem by comparing each sentence not only with the label and caption of the chart but also with the word included in the chart body when extracting the chart explanatory sentence from the document body. In addition, for example, in extracting an explanatory sentence of a table, a sentence in which words of a plurality of cells of the table appear in combination, such as a combination of a unit ("°C", "km", or the like) of a table header row and a numerical value of a table data row, is highly likely to be particularly suitable as an explanatory sentence, and thus such a sentence is preferentially selected as an explanatory sentence.

In addition, the sentence extracting device according to the present exemplary embodiment solves the problem by additionally extracting not only sentences including many words associated with the chart body, the label, and the caption but also sentences in the same paragraph as these sentences as explanatory sentences. This is because a sentence that does not include many words related to a chart but is important as a chart explanatory sentence is often included in the same paragraph as a sentence including many words related to a chart. However, if the entire paragraph is extracted in a case where the length of the paragraph is long, unnecessary information that is not an explanatory sentence may be included. Therefore, when the length of the paragraph is equal to or longer than a certain length, only a sentence sandwiched between sentences including many words associated with the chart in the paragraph is extracted as the explanatory sentence.

In the present specification, a "chart" means a diagram and/or a table. The label of the chart is, for example, a diagram number and a table number of the chart such as "FIG. 1". The caption of the chart is a sentence describing the contents of the chart, and is often written in an area following the label of the chart. The main body of the chart is an area in which the contents of the chart are written, excluding the label and caption of the chart. The main body is an area of the digital document excluding a chart, and a text and a paragraph of the digital document are written in the main body.

An outline of a sentence extracting device according to an embodiment will be described. FIG. 1 illustrates a hardware configuration of a sentence extracting device according to an embodiment.

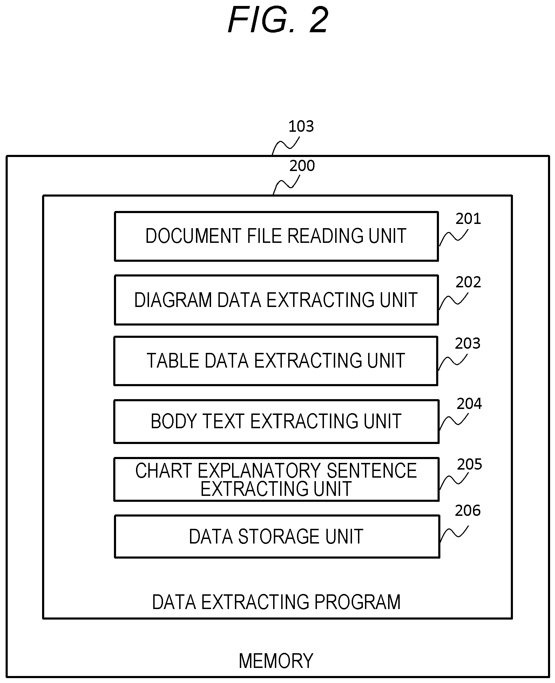

A sentence extracting device 100 executes a data extracting program (see FIG. 2) to extract a chart explanatory sentence from the document file.

The sentence extracting device 100 is a device capable of performing various types of information processing, for example, an information processing device such as a computer. The information processing device includes an arithmetic element (CPU 102 in FIG. 1) constituting a control unit, a recording medium (memory 103 and disk device 104 in FIG. 1) constituting a data storage unit, and further includes a communication interface, an input unit such as a mouse and a keyboard, and a screen unit such as a display as necessary.

The arithmetic element is, for example, a central processing unit (CPU), a field-programmable gate array (FPGA), or the like. The recording medium includes, for example, a magnetic recording medium such as a hard disk drive (HDD), a semiconductor recording medium such as a random access memory (RAM), a read only memory (ROM), and a solid state drive (SSD), and the like. In addition, a combination of an optical disk such as a digital versatile disk (DVD) and an optical disk drive is also used as a recording medium. In addition, a known recording medium such as a magnetic tape medium is also used as the recording medium.

A program such as firmware is stored in the recording medium. When the operation of the sentence extracting device 100 is started (for example, when the power is turned on), a program such as firmware is read from the recording medium and executed to perform overall control of the sentence extracting device 100. In addition, the recording medium stores data and the like necessary for each process of the sentence extracting device 100 in addition to the program.

Note that the sentence extracting device 100 according to the present exemplary embodiment may include a so-called cloud configured to allow a plurality of information processing devices to communicate via a communication network.

In FIG. 1, the CPU 102 is connected to the memory 103 which is a main storage device via a bus 101, and executes a data extracting program on the memory 103.

The CPU 102 and the memory 103 are connected to the disk device 104 as a secondary storage device via the bus 101, and a data extracting program executed on the CPU 102 can read a document file stored in the disk device 104 into the memory 103 and write data into the disk device 104.

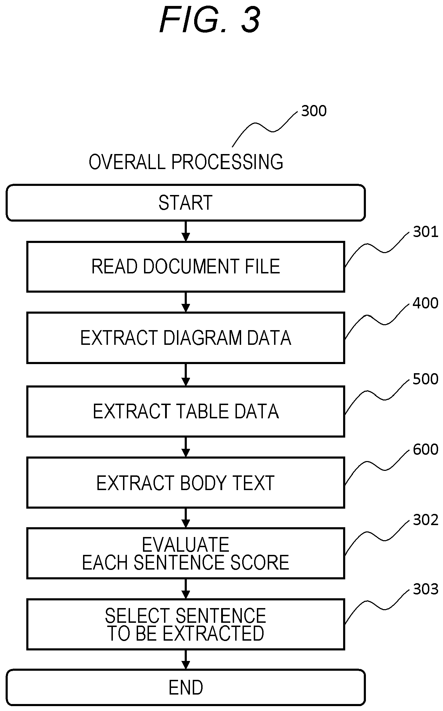

FIG. 2 illustrates a configuration of a data extracting program 200 stored in the memory 103 of the sentence extracting device 100 according to the embodiment, and FIG. 3 illustrates an overall processing flow 300 of the data extracting program 200. The overall processing flow 300 includes the following six steps.

First, a document file reading unit 201 reads a document file stored in the disk device 104 and develops the document file on the memory 103 as document data (processing 301).

Secondly, a diagram data extracting unit 202 analyzes the document data read by the document file reading unit 201 and detects a diagram element 421. In addition, a diagram label 422, a diagram caption 423, and the in-diagram text corresponding to the detected diagram element 421 are extracted as diagram data 431 (processing 400).

Thirdly, a table data extracting unit 203 analyzes the document data read by the document file reading unit 201 and detects a table element 521. A table label 522, a table caption 523, and in-table text corresponding to detected table element 521 are extracted as the table data 531 (processing 500).

Fourth, a body text extracting unit 204 analyzes the document data read by the document file reading unit 201 and extracts a body text 611. Further, the body text 611 is divided into paragraphs by analyzing the coordinate information of the body text 611 (processing 600).

Fifth, a chart explanatory sentence extracting unit 205 extracts an explanatory sentence of the diagram element 421 extracted by the diagram data extracting unit 202 or the table element 521 extracted by the table data extracting unit 203 from the body text 611 extracted by the body text extracting unit 204 (processing 302).

Sixth, a data storage unit 206 stores the diagram data 431 extracted by the diagram data extracting unit 202, the table data 531 extracted by the table data extracting unit 203, and the chart explanatory sentence extracted by the chart explanatory sentence extracting unit 205 in the disk device 104 (processing 303).

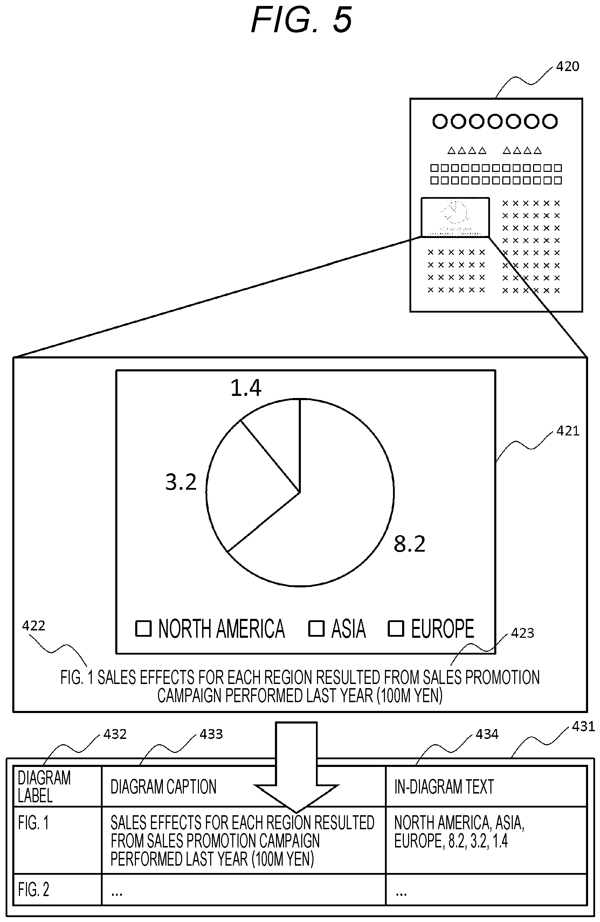

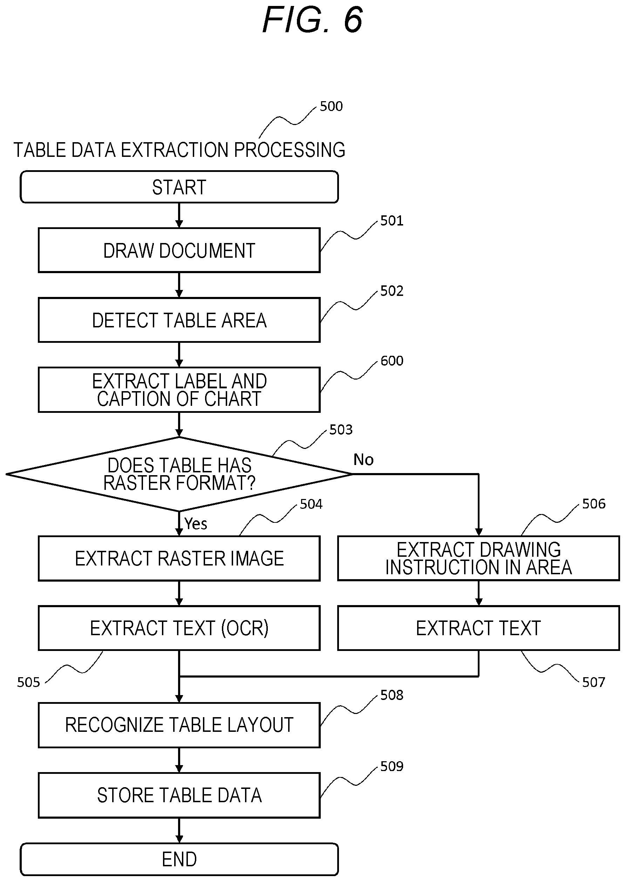

FIG. 5 illustrates processing 400 in which the diagram data extracting unit 202 extracts the diagram label 422, the diagram caption 423, and an in-diagram text from document data as the diagram data 431 in the data extracting program 200 according to the embodiment. FIG. 6 illustrates an example of an operation of extracting the diagram data 431 in processing 400. Hereinafter, the procedure of processing 400 will be described in order.

First, the diagram data extracting unit 202 reads the document data developed on the memory 103 and draws a layout image 420 of the document on the memory 103 (processing 401) . The layout image 420 may be drawn in a raster format or a vector format depending on implementation of the subsequent processing 402.

Secondly, the diagram data extracting unit 202 detects the diagram element 421 from the document layout image 420 drawn on the memory 103 (processing 402). Here, the diagram element refers to a rectangular region surrounding the diagram body excluding labels and captions. Processing 402 can be implemented by, for example, inputting the layout image 420 drawn in a raster format to a convolutional neural network or clustering drawing instructions in the layout image 420 drawn in a vector format.

Thirdly, the diagram data extracting unit 202 extracts the diagram label 422 and the diagram caption 423 from the document data developed on the memory 103 using the coordinate information of the diagram element 421 detected in processing 402 (processing 600).

Fourthly, the diagram data extracting unit 202 extracts the in-diagram text from the document data expanded on the memory 103 or the document layout image 420 drawn on the memory 103 (processing 403 to 407). Here, the in-diagram text refers to a text included in the area of the diagram element 421. In a case where the diagram elements 421 are embedded in the document in a raster format, the extraction of the in-diagram text is performed by applying OCR (Optical Character Recognition) on the diagram elements 421 extracted as a raster image (processing 404 and 405). On the other hand, in a case where the diagram elements 421 are embedded in the document in a vector format, the extraction of the in-diagram text is performed by extracting all drawing instructions regarding the text from the diagram elements 421 extracted as vector images (processing 406 and 407).

Fifth, the diagram data extracting unit 202 stores the extracted diagram label 422, diagram caption 423, and in-diagram text in the memory 103 as diagram data 431 (processing 408). The diagram data 431 is accessed as a record of a table including three columns of a first column 432 for storing a diagram label, a second column 433 for storing a diagram caption, and a third column 434 for storing an in-diagram text. All columns 432 to 434 are in plain text format.

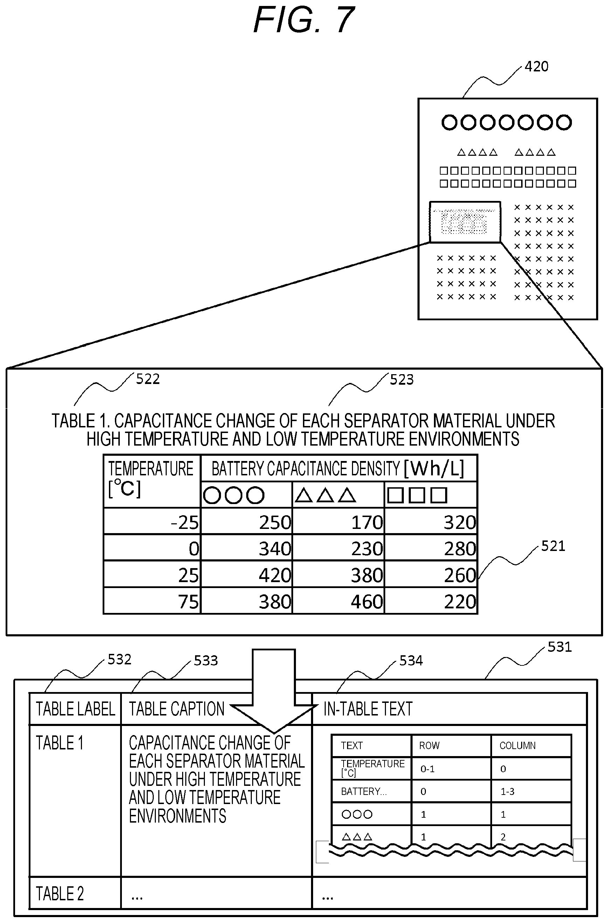

FIG. 6 illustrates processing 500 in which the table data extracting unit 203 extracts the table label 522, the table caption 523, and the in-table text from the document data as the table data 531 in the data extracting program 200 according to the embodiment. FIG. 7 illustrates an operation example of extracting the table data 531 in processing 500. Hereinafter, the procedure of processing 500 will be described in order.

First, the table data extracting unit 203 reads the document data developed on the memory 103 and draws the layout image 420 of the document on the memory 103 (processing 501).

Secondly, the table data extracting unit 203 detects the table element 521 from the document layout image 420 drawn on the memory 103 (processing 502). Here, the table element refers to a rectangular area of the table body excluding labels and captions. Processing 502 can be implemented by, for example, inputting the layout image 420 drawn in a raster format to a convolutional neural network or clustering drawing instructions in the layout image 420 drawn in a vector format.

Thirdly, the table data extracting unit 203 extracts the table label 522 and the table caption 523 from the document data expanded on the memory 103 based on the coordinate information of the table element 521 detected in processing 502 (processing 600). Processing 600 is common to the diagram data extracting unit 202.

Fourthly, the table data extracting unit 203 extracts the in-table text from the document data developed on the memory 103 or the document layout image 420 drawn on the memory 103 (processing 503 to 507). In a case where the table element 521 is embedded in the document in a raster format, the extraction of the in-table text is performed by applying OCR (Optical Character Recognition) on the table element 521 extracted as a raster image (processing 504 and 505) .

On the other hand, in a case where the table element 521 is embedded in the document in a vector format, the extraction of the in-table text is performed by extracting all drawing instructions related to the text from the table element 521 extracted as the vector image (processing 506 and 507). In any case, not only the in-table text is acquired as the plain text, but also coordinate information indicating the position of each word/phrase included in the text in the page is acquired.

Fifth, the table data extracting unit 203 divides the table element 521 in the row direction and the column direction, and determines in which row and column in the table element 521 each word/phrase included in the in-table text extracted in processing 503 to 507 is included. This processing is performed by comparing the coordinate ranges of each row and column obtained by dividing the table element 521 with the coordinates of each word/phrase of the in-table text (processing 508).

Sixth, the table data extracting unit 203 stores the extracted table label 522, table caption 523, and in-table text in the memory 103 as table data 531 (processing 509). The table data 531 is accessed as a record of a table including three columns of a first column 532 for storing a table label, a second column 533 for storing a table caption, and a third column 534 for storing an in-table text.

The two columns of the first column 532 and the second column 533 are in a plain text format, but the data of the third column 534 is stored in a table format to which an index indicating a position in the row direction and the column direction in the table is added for each word/phrase in the in-table text. The index is not limited to a single integer value. For example, for a word/phrase extending over a plurality of rows and columns, all row/column positions including the word/phrase can be expressed as a range value of an integer.

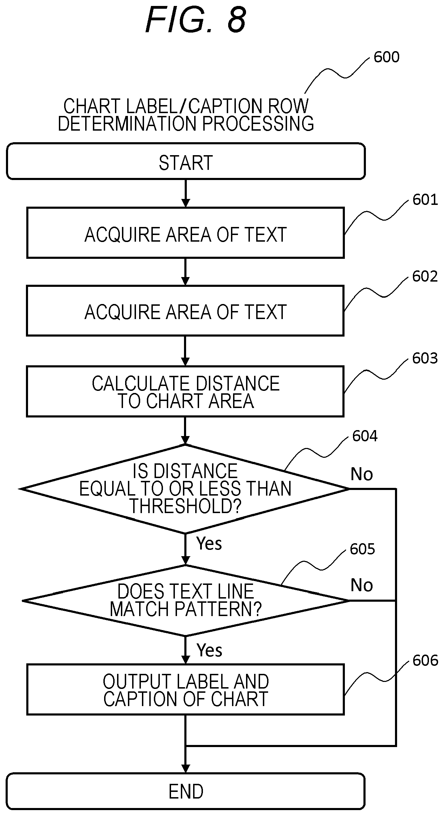

FIG. 8 illustrates common processing 600 when the diagram data extracting unit 202 extracts the diagram label 422 and the diagram caption 423, or when the table data extracting unit 203 extracts the table label 522 and the table caption 523. Processing 600 is executed for each text line 614 of the body text 611 extracted by the body text extracting unit 204.

First, the diagram and table data extracting units 202 and 203 acquire coordinate information of the target text line 614 (processing 601).

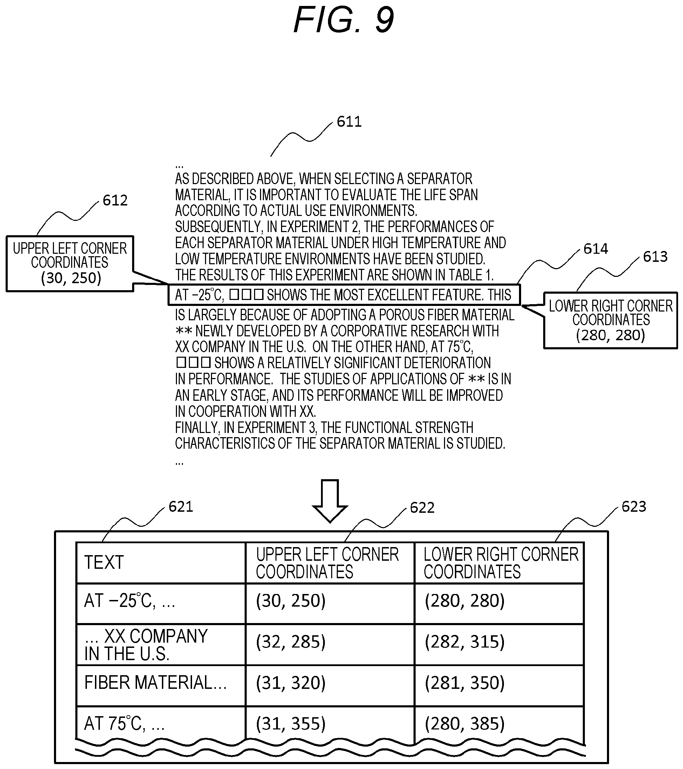

FIG. 9 illustrates an example of the coordinate information acquisition operation in processing 601. The coordinate information includes, for example, a set of upper left corner coordinates 612 and lower right corner coordinates 613 on the document layout image 420 of the text line 614. The coordinate information of each text line 614 is accessed as a record of a table including three columns of a first column 621 for storing text, a second column 622 for storing upper left corner coordinates, and a third column 623 for storing lower right corner coordinates.

Secondly, the diagram and table data extracting units 202 and 203 acquire coordinate information of the diagram element 421 and the table element 521 to be extracted for labels and captions (processing 602). This coordinate information includes, for example, a set of upper left corner coordinates and lower right corner coordinates on the document layout image 420 of the diagram element 421 and the table element 521.

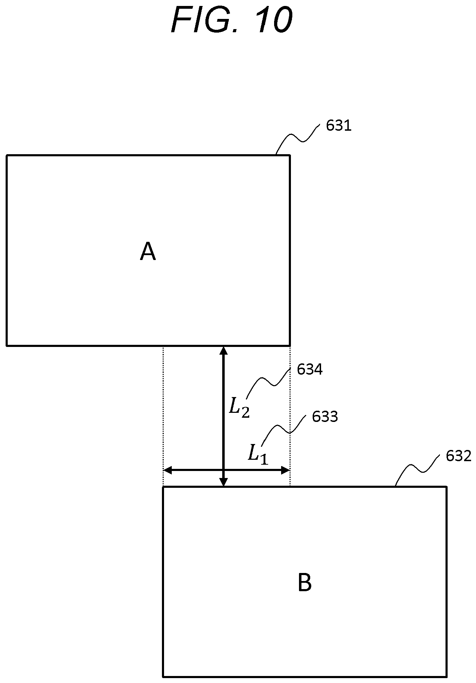

Thirdly, the diagram and table data extracting units 202 and 203 calculate a distance between the coordinate information of the text line 614 acquired in processing 602 and the coordinate information of the diagram element 421 and the table element 521 acquired in processing 603 (processing 603). This distance is calculated by, for example, the method illustrated in FIG. 10.

In FIG. 10, a rectangle A 631 and a rectangle B 632 correspond to a chart element and coordinate information of a text line, respectively. It is assumed that all of the rectangles A and B are rectangles whose four sides are parallel to the coordinate axes and do not overlap each other. L1 (633) is a length of overlapping when the rectangle A 631 and the rectangle B 632 are projected on any coordinate axis. L2 (634) is a distance between the rectangle A 631 and the rectangle B 632 in a direction perpendicular to L1 (633). At this time, the distance D between the rectangles A and B is defined as follows:

[Math. 1]

$$D = \frac{2}{\pi} \tan^{-1} \frac{L_2}{L_1}$$

The distance D defined in this manner takes a real value from 0 to 1.

Fourth, the distance between the coordinate information calculated in processing 603 is compared with a predefined threshold (processing 604). In a case where the distance is less than the threshold, it is determined that the text line 614 is proximate to the chart element. In a case where the distance is longer than the threshold, it is determined that the text line 614 is irrelevant to the chart element, and the process proceeds to processing of the next text line.

The text line determined to be proximate to the chart element in processing 604 is matched against a predefined text pattern (processing 605). The text pattern can be implemented using, for example, a regular expression. The regular expression is an expression of a finite automaton that determines whether a symbol string matches a specific pattern as a text including a special symbol.

As an implementation example of the text pattern using the regular expression, for example, it is assumed that the text pattern matches a text line starting with a chart label, such as "^Table[0-90-9]+\..+$" or "^Table[0-9]+\..+$". A text line matching the text pattern is determined to include a chart label and a caption and output as the chart label and the caption (processing 606).

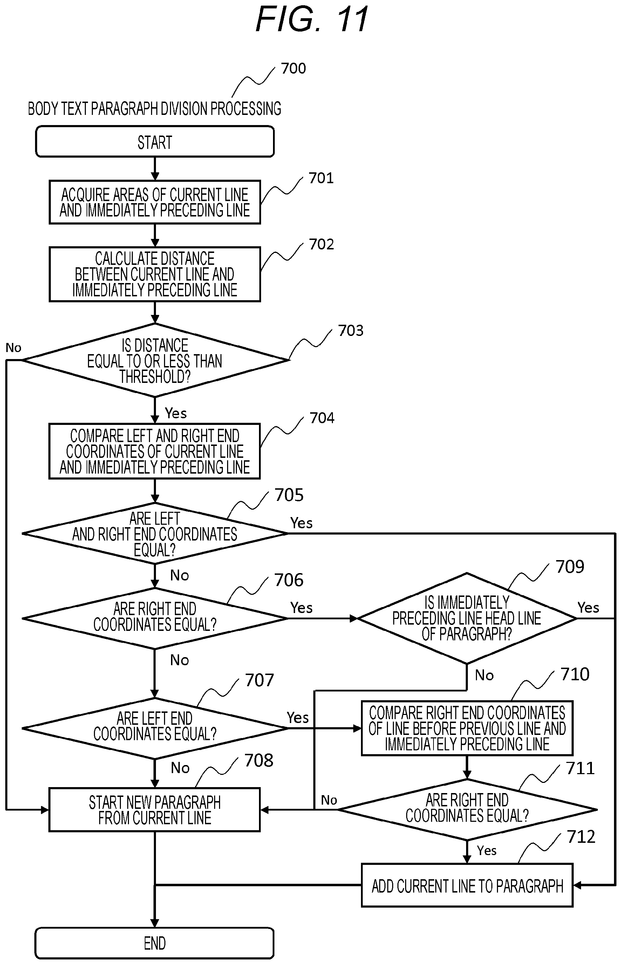

FIG. 11 illustrates processing 700 when the body text extracting unit 204 divides the body text 611 extracted from the document data into paragraphs. Processing 700 is performed for each text line 614 in the body text 611.

First, the body text extracting unit 204 acquires coordinate information of the current text line and the immediately preceding text line in the body text (processing 701).

Secondly, the body text extracting unit 204 calculates the distance between the current text line and the immediately preceding text line using, for example, the method illustrated in FIG. 10 (processing 702).

In a case where the distance between the current text line and the immediately preceding text line exceeds the threshold, it is determined that the current text line and the immediately preceding text line belong to another paragraph, and a new paragraph is started from the current text line (processing 708). Otherwise, it is determined that the current text line and the immediately preceding text line are in close proximity, and it is subsequently determined whether the two lines belong to the same paragraph (processing 704 to 707, 709 to 711).

In the determination processing, first, the body text extracting unit 204 compares the left and right end coordinates of the current text line and the immediately preceding text line. At the time of comparison, in order to allow a layout error of the document, it may be determined that the coordinates are equal when the difference between the coordinates falls within a certain small value or less.

In a case where the left and right end coordinates are equal, it is determined that the current text line and the immediately preceding text line belong to the same paragraph, and the current text line is added to the end of the same paragraph as the immediately preceding text line (processing 712).

In a case where the left and right end coordinates are not equal, it is determined that the current text line and the immediately preceding text line do not belong to the same paragraph, and a new paragraph is started from the current text line (processing 708).

In a case where only the right end coordinates are equal and the left end coordinates are different, only when the immediately preceding text line is the first line of the paragraph, the current text line is added to the end of the same paragraph as the immediately preceding text line. This is a procedure for making a correct determination even when the first line of the paragraph is indented.

In a case where only the left end coordinates are equal and the right end coordinates are different, only in a case where the right end coordinates of the text line before the previous line is equal to the right end coordinates of the immediately preceding text line, the current text line is added to the end of the same paragraph as the immediately preceding text line. This is a procedure for making a correct determination even when the last line of the paragraph does not reach the right end of the column.

Processing 700 is applied from the first text line to the last text line in the document, thereby splitting the body text of the document into paragraphs.

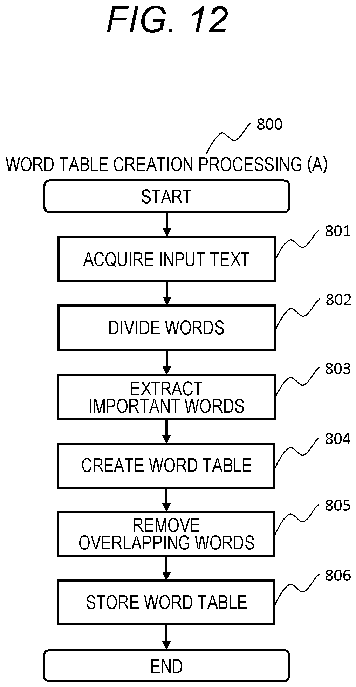

FIG. 12 illustrates processing when the chart explanatory sentence extracting unit 205 creates a word table (A) 812 related to each sentence of the body text 611.

First, the chart explanatory sentence extracting unit 205 acquires a text of a sentence to be a creation target of a word table (processing 801) and divides the text into words (processing 802). For example, in the case of Japanese, the word is divided using morphological analysis software (for example, mecab) or the like.

Secondly, the chart explanatory sentence extracting unit 205 determines whether each word divided in processing 802 is an important word, and extracts only the important word (processing 803). Regarding the determination of the important word, for example, an implementation in which a noun, a verb, an adjective, and an adverb are important words or an implementation in which a word in a predefined dictionary is an important word can be considered.

Third, the chart explanatory sentence extracting unit 205 creates a word table (A) 812 from the important words extracted in processing 803 (processing 804).

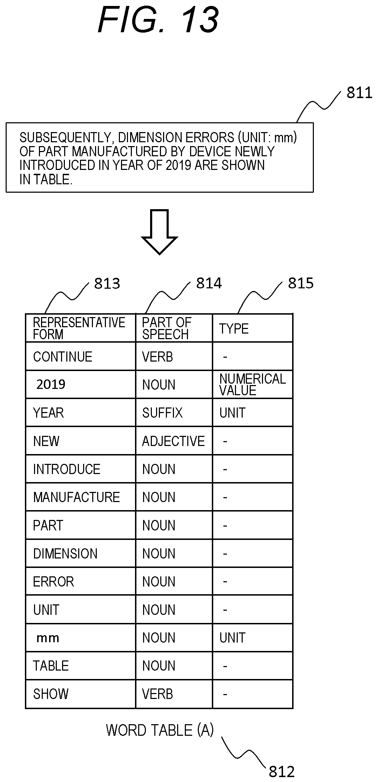

FIG. 13 illustrates an example of creating the word table (A) 812 from a sentence 811 in the main body. The word table (A) 812 includes, for example, three columns of a first column 813 for storing a representative form, a second column 814 for storing a part of speech, and a third column 815 for storing a type.

A character string that can uniquely identify a word is stored in the first column 813. For example, for Japanese verbs and adjectives, it is conceivable to store specific conjugations and stems in the first column. In the second column 814, for example, the part of speech classification of the word output by the morphological analysis software is stored. The third column 815 stores an ID for identifying a word having a special meaning such as a numerical value or a unit, for example. The determination as to whether the word has a special meaning is made by matching the word with a predefined dictionary or text pattern.

Fourth, the chart explanatory sentence extracting unit 205 removes overlapping rows from the word table (A) 812 so that the same row does not appear twice or more (processing 805).

Fifth, the chart explanatory sentence extracting unit 205 stores the word table (A) 812 in the memory 103 (processing 806).

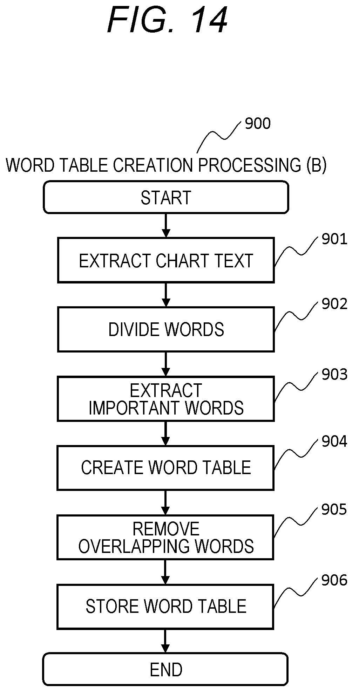

FIG. 14 illustrates processing 900 when the chart explanatory sentence extracting unit 205 creates the word table (B) 912 corresponding to the in-chart text.

First, the chart explanatory sentence extracting unit 205 acquires the in-chart text from the diagram data 431 extracted by the diagram data extracting unit 202 or the table data 531 extracted by the table data extracting unit 203 (processing 901).

Secondly, the chart explanatory sentence extracting unit 205 divides the in-chart text extracted in processing 901 into words (processing 902).

Third, the chart explanatory sentence extracting unit 205 extracts an important word from the words in the in-chart text obtained in processing 902 (processing 903).

Fourth, the chart explanatory sentence extracting unit 205 creates a word table (B) 912 from the important words extracted in processing 903 (processing 904).

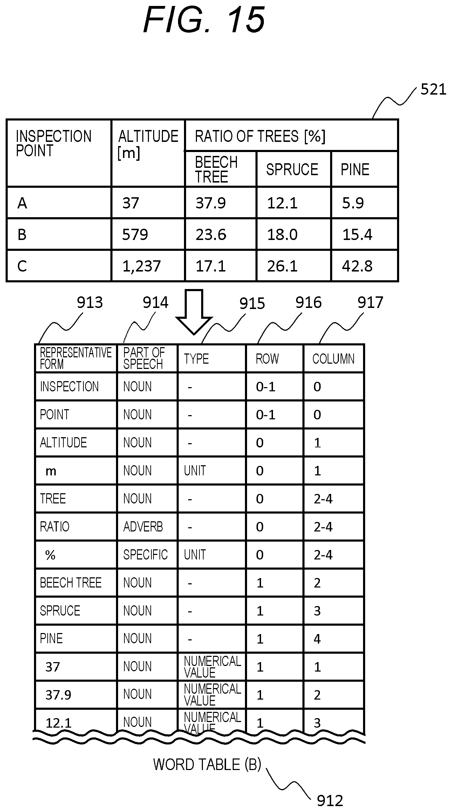

An example of creating the word table (B) 912 is illustrated in FIG. 15. Similarly to the word table (A) 812, the word table (B) 912 includes five columns in total including a fourth column 916 that stores a row number indicating a position of each word in the table and a fifth column 917 that stores a column number, in addition to three columns including a first column 913 that stores a representative form of each important word, a second column 914 that stores a part of speech, and a third column 915 that stores a type.

For the text extracted from the table data 531, the row number of each word is stored in the fourth column, and the column number of each word is stored in the fifth column. For the text extracted from the diagram data 431, the fourth column and the fifth column are NaN. NaN is a value that is not equal when compared to any value that may be stored in the fourth column as well as the fifth column.

Fifth, the chart explanatory sentence extracting unit 205 removes overlapping rows from the word table (B) 912 created in processing 904 (processing 905).

Sixth, the chart explanatory sentence extracting unit 205 stores the word table (B) 912 from which the duplicate words have been removed in processing 905 in the memory 103 (processing 906).

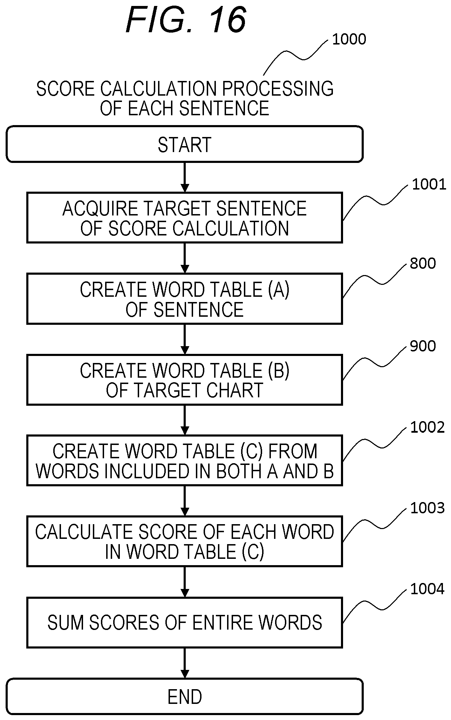

FIG. 16 illustrates processing 1000 when the chart explanatory sentence extracting unit 205 calculates the score of each sentence in the body text 611. Processing 1000 is performed for each sentence in the body text 611 by the number of the chart elements in the document. Each sentence can be obtained, for example, by dividing the body text 611 by a full stop or a period, but the sentence may be divided with higher accuracy using natural language processing software.

First, the chart explanatory sentence extracting unit 205 extracts a sentence to be subjected to score calculation from the body text 611 (processing 1001).

Secondly, the chart explanatory sentence extracting unit 205 creates a word table (A) 812 of sentences to be subjected to score calculation (processing 800).

Third, the chart explanatory sentence extracting unit 205 creates a word table (B) 912 of chart elements to be subjected to score calculation (processing 900).

Fourth, the chart explanatory sentence extracting unit 205 creates a word table (C) 1031 from the word table (A) 812 and the word table (B) 912 (processing 1002).

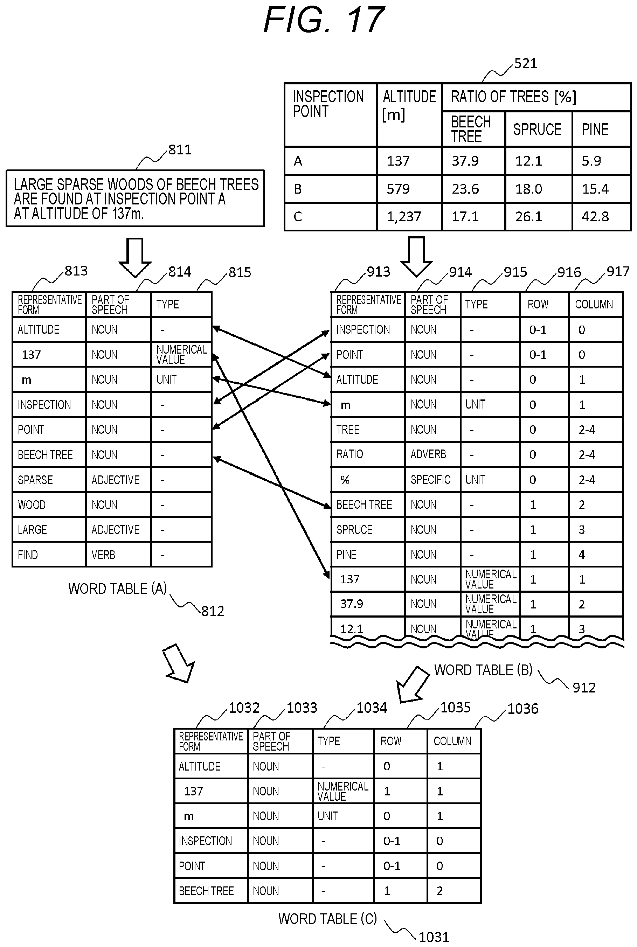

An example of creating the word table (C) 1031 is illustrated in FIG. 17. The word table (C) 1031 includes five columns including a first column 1032 that stores a representative form of a word, a second column 1033 that stores a part of speech, a third column 1034 that stores a type, a fourth column 1035 that stores a row number, and a fifth column 1036 that stores a column number.

The word table (C) 1031 is obtained by extracting a row in which at least one row of the word table (A) 912 matches the first columns 813 and 913 from each row of the word table (B) 812.

Fifth, the chart explanatory sentence extracting unit 205 calculates the score of each word in the word table (C) 1031 (processing 1003). This processing is performed with reference to a score magnification table 1041 defined in advance.

The score of each word in the word table (C) 1031 is initialized to 1, and for a word that matches the score magnification table 1041, the score is multiplied by the magnification determined in the score magnification table 1041.

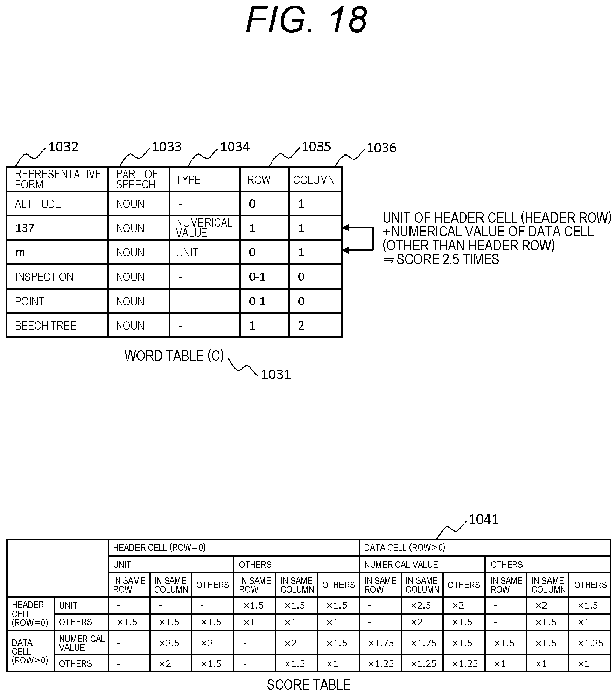

FIG. 18 illustrates an example of score calculation. In the word table (C) in FIG. 18, words "137" and "m" are included. These match the combination of the first row (header row) of the table and the second and subsequent rows (data rows) of the table and the combination of the type "numerical value" and "unit". When these conditions are referred to in the score magnification table 1041, since a numerical value of 2.5 times is described as the score magnification, the scores of both "137" and "m" are set to 2.5.

Sixth, the chart explanatory sentence extracting unit 205 outputs the sum of the scores of the words calculated in processing 1003 as the score of the sentence (processing 1004).

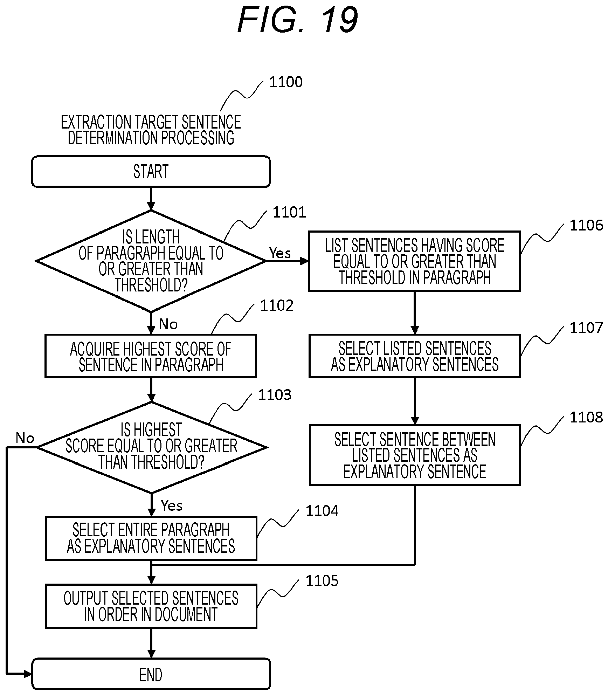

FIG. 19 illustrates processing 1100 when the chart explanatory sentence extracting unit 205 selects an explanatory sentence related to a specific chart element in the body text 611. Processing 1100 is performed for each chart element in the document by the number of paragraphs in the body text 611.

First, the chart explanatory sentence extracting unit 205 compares the length of the target paragraph with a predefined threshold (processing 1101). The length of the paragraph is measured by, for example, the number of characters or the number of words.

When the length of the paragraph is greater than or equal to the threshold, all sentences having the score greater than or equal to the threshold are listed in the paragraph (processing 1106). All the sentences listed in processing 1106 are selected as explanatory sentences (processing 1107). A sentence located between sentences listed in processing 1106 is also selected as an explanatory sentence (processing 1108). In the processing 1106, when no sentence is selected, the entire paragraph is regarded as not corresponding to the explanatory sentence. Finally, the selected sentences are rearranged in the order in the document and output (processing 1105).

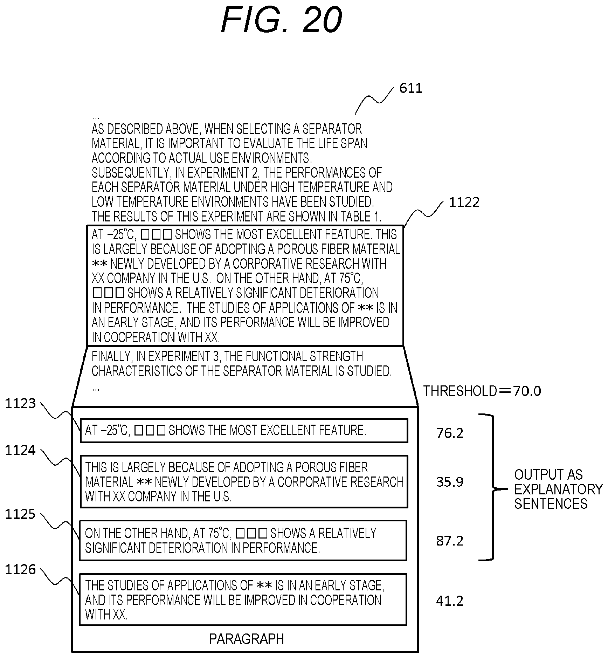

FIG. 20 illustrates an example of the processing 1106 to 1108 in a case where the length of the paragraph is equal to or more than the threshold. In FIG. 20, processing 1100 is applied to paragraph 1122 in the body text 611. Out of sentences 1123 to 1126 in the paragraph, sentences 1123 and 1125 have scores equal to or higher than a predefined threshold 70.0. In this case, in addition to 1123 and 1125, 1124 interposed therebetween is also selected as the explanatory sentence.

In a case where the length of the paragraph is less than the threshold, the highest score for the number of sentences in the paragraph is calculated (processing 1102) and the highest score is compared to a predefined threshold (processing 1103). When the maximum value of the score exceeds the threshold, the entire paragraph is selected as an explanatory sentence (processing 1104). When all the sentences in the paragraph do not exceed the threshold, the entire paragraph is regarded as not corresponding to the explanatory sentence. Finally, the selected sentences are rearranged in the order in the document and output (processing 1105) .

Therefore, according to the present embodiment, it is possible to implement a sentence extracting device and a sentence extracting method capable of extracting sentences related to diagrams or tables in a wider range.

Then, by extracting a wider range of explanatory sentences, data analysis utilizing a chart of a digital document is promoted, and more valuable information can be obtained through the analysis.

The embodiments have been described about the configuration in detail in order to help with understanding on the invention, but the invention is not limited to the one equipped with all the configurations. In addition, some of the configurations of each embodiment may be added, deleted, or replaced with respect to the other configurations.

Each of the above configurations, functions, processing units, processing means, and the like may be partially or entirely achieved by hardware by, for example, designing by an integrated circuit. In addition, the invention may be realized by a software program code which realizes the functions of the embodiments. In this case, a recording medium recorded with the program code is provided to a computer, and a processor of the computer reads out the program code stored in the recording medium. In this case, the program code itself read out of the recording medium is used to realize the functions of the above embodiments. The program code itself and the recording medium storing the program code is configured in the invention. As a recording medium to supply such a program code, for example, there are a flexible disk, a CD-ROM, a DVD-ROM, a hard disk, a Solid State Drive (SSD), an optical disk, a magneto-optical disk, a CD-R, a magnetic tape, a nonvolatile memory card, and a ROM.

In addition, the program code to realize the functions of the present embodiment may be embedded by a wide program such as assembler, C/C++, perl, Shell, PHP, Java (registered trademark) or a script language.

Further, the software program code to realize the functions of the embodiment is distributed through a network, and stored in a recording unit such as a hard disk and a memory of the computer or a recording medium such as a CD-RW and a CD-R. The processor provided in the computer may read and perform the program code stored in the recording unit or the recording medium.

In the above embodiments, only control lines and information lines considered to be necessary for explanation are illustrated, but not all the control lines and the information lines for a product are illustrated. All the configurations may be connected to each other.

Reference Signs List

100    sentence extracting device

200    data extracting program
201    document file reading unit
202    diagram data extracting unit
203    table data extracting unit
204    body text extracting unit
205    chart explanatory sentence extracting unit
206    data storage unit

**Claims**

1. A sentence extracting device that includes a processor and extracts a sentence related to a diagram or a table from a body of a digital document including the diagram or the table and the body, wherein

   the diagram or table has a label, a caption, and a body, and
   the processor includes an extraction unit that extracts, from the body, the sentence including a second word associated with a first word included in the body of the diagram or the table.

2. The sentence extracting device according to claim 1, wherein the extraction unit extracts the sentence including the second word that coincides with the first word from the body.

3. The sentence extracting device according to claim 1, wherein the extraction unit sets, as the second word, a word that is a specific part of speech or a word registered in advance.

4. The sentence extracting device according to claim 1, wherein the extraction unit calculates a degree of relevance for the sentence including the second word, and extracts the sentence in which the degree of relevance exceeds a predetermined first threshold.

5. The sentence extracting device according to claim 4, wherein the extraction unit calculates the degree of relevance based on a position where the first word is described in the body of the diagram or the table.

6. The sentence extracting device according to claim 4, wherein the extraction unit calculates the degree of relevance based on a type of the first word.

7. A sentence extracting device that extracts a sentence related to a diagram or a table from a body of a digital document including the diagram or the table and the body, the sentence extracting device comprising:
   an extraction unit that extracts, from the body, the sentence included in a paragraph including a second word associated with a third word included in a label, a caption, or a body of the diagram or the table.

**8.** The sentence extracting device according to claim 7, wherein the extraction unit extracts the sentence including the second word that coincides with the third word from the body.

**9.** The sentence extracting device according to claim 7, wherein the extraction unit selects the sentence to be extracted based on whether a number of words included in the paragraph exceeds a predetermined second threshold.

**10.** The sentence extracting device according to claim 7, wherein the extraction unit sets, as the second word, a word that is a specific part of speech or a word registered in advance.

**11.** The sentence extracting device according to claim 7, wherein the extraction unit calculates a degree of relevance for the sentence including the second word, and extracts the sentence in which the degree of relevance exceeds a predetermined first threshold.

**12.** The sentence extracting device according to claim 11, wherein the extraction unit calculates the degree of relevance based on a position where the third word is described in the body of the diagram or the table.

**13.** The sentence extracting device according to claim 11, wherein the extraction unit calculates the degree of relevance based on a type of the third word.

**14.** The sentence extracting device according to claim 11, wherein, when a number of words included in the paragraph exceeds a predetermined second threshold, the extraction unit extracts only the sentence sandwiched between a plurality of sentences having the degree of relevance exceeding the first threshold.

**15.** A sentence extracting method performed by a sentence extracting device that extracts a sentence associated with a diagram or a table from a body of a digital document including the diagram or the table and the body, the sentence extracting method comprising:

extracting, from the body and by a processor of the sentence extracting device, the sentence including a second word associated with a first word included in a body of the diagram or the table.

# FIG. 1

DISK DEVICE 104

102

103

101

CPU

MEMORY

DATA EXTRACTING DEVICE

100

# FIG. 2

103

200

| DOCUMENT FILE READING UNIT | 201 |

| DIAGRAM DATA EXTRACTING UNIT | 202 |

| TABLE DATA EXTRACTING UNIT | 203 |

| BODY TEXT EXTRACTING UNIT | 204 |

| CHART EXPLANATORY SENTENCE EXTRACTING UNIT | 205 |

| DATA STORAGE UNIT | 206 |

DATA EXTRACTING PROGRAM

MEMORY

# FIG. 3

OVERALL PROCESSING — 300

```
          START
            ↓
    READ DOCUMENT FILE        — 301
            ↓
    EXTRACT DIAGRAM DATA      — 400
            ↓
    EXTRACT TABLE DATA        — 500
            ↓
    EXTRACT BODY TEXT         — 600
            ↓
        EVALUATE
   EACH SENTENCE SCORE        — 302
            ↓
     SELECT SENTENCE
     TO BE EXTRACTED          — 303
            ↓
           END
```

# FIG. 4

400

DIAGRAM DATA EXTRACTION PROCESSING

```
        START
          │
          ▼
┌─────────────────────┐
│  DRAWING DOCUMENT   │  401
└─────────────────────┘
          │
          ▼
┌─────────────────────┐
│ DETECT DIAGRAM AREA │  402
└─────────────────────┘
          │
          ▼
┌─────────────────────┐
│  EXTRACT LABEL AND  │  600
│  CAPTION OF CHART   │
└─────────────────────┘
          │
          ▼
```

403

DOES DIAGRAM HAVE RASTER FORMAT?  No

Yes

| 404 EXTRACT RASTER IMAGE | 406 EXTRACT DRAWING INSTRUCTION IN AREA |

| EXTRACT TEXT IN IMAGE (OCR) | EXTRACT TEXT IN AREA |

405

407

```
┌─────────────────────┐
│ STORE DIAGRAM DATA  │  408
└─────────────────────┘
          │
          ▼
        END
```

# FIG. 5

420

421

422

423

○○○○○○

△△△△  △△△△

□□□□□□□□□□
□□□□□□□□□□

× × × × ×
× × × × ×
× × × × ×
× × × × ×
× × × × × × × × × ×
× × × × × × × × × ×
× × × × × × × × × ×

1.4

3.2

8.2

□ NORTH AMERICA   □ ASIA   □ EUROPE

FIG. 1 SALES EFFECTS FOR EACH REGION RESULTED FROM SALES PROMOTION
CAMPAIGN PERFORMED LAST YEAR (100M YEN)

432   433   434   431

| DIAGRAM LABEL | DIAGRAM CAPTION | IN-DIAGRAM TEXT |
|---|---|---|
| FIG. 1 | SALES EFFECTS FOR EACH REGION RESULTED FROM SALES PROMOTION CAMPAIGN PERFORMED LAST YEAR (100M YEN) | NORTH AMERICA, ASIA, EUROPE, 8.2, 3.2, 1.4 |
| FIG. 2 | ... | ... |

# FIG. 6

TABLE DATA EXTRACTION PROCESSING — 500

```
        ┌─────────────────────────┐
        │          START          │
        └─────────────────────────┘
                    │
        ┌─────────────────────────┐
        │      DRAW DOCUMENT       │ — 501
        └─────────────────────────┘
                    │
        ┌─────────────────────────┐
        │    DETECT TABLE AREA     │ — 502
        └─────────────────────────┘
                    │
        ┌─────────────────────────┐
        │    EXTRACT LABEL AND     │ — 600
        │    CAPTION OF CHART      │
        └─────────────────────────┘
                    │
              ╱───────────╲
             ╱ DOES TABLE  ╲        No          503
            ╱ HAS RASTER    ╲─────────────┐
            ╲ FORMAT?       ╱             │
             ╲─────────────╱              │
                   │ Yes                  │
        ┌─────────────────────┐    ┌──────────────────────┐
        │  EXTRACT RASTER      │    │  EXTRACT DRAWING      │ — 506
        │     IMAGE      — 504 │    │  INSTRUCTION IN AREA  │
        └─────────────────────┘    └──────────────────────┘
                   │                       │
        ┌─────────────────────┐    ┌──────────────────────┐
        │  EXTRACT TEXT (OCR)  │    │    EXTRACT TEXT       │
        └─────────────────────┘    └──────────────────────┘
             505  │                       │ 507
                  ├───────────────────────┘
        ┌─────────────────────────┐
        │  RECOGNIZE TABLE LAYOUT  │ — 508
        └─────────────────────────┘
                    │
        ┌─────────────────────────┐
        │     STORE TABLE DATA     │ — 509
        └─────────────────────────┘
                    │
        ┌─────────────────────────┐
        │           END           │
        └─────────────────────────┘
```

# FIG. 7

420

○○○○○○

△△△△  △△△△

□□□□□□□□□□□
□□□□□□□□□□□

x x x x x x
x x x x x x
x x x x x x
x x x x x x
x x x x x x    x x x x x x
x x x x x x    x x x x x x
x x x x x x    x x x x x x
x x x x x x    x x x x x x

522                    523

### TABLE 1. CAPACITANCE CHANGE OF EACH SEPARATOR MATERIAL UNDER HIGH TEMPERATURE AND LOW TEMPERATURE ENVIRONMENTS

| TEMPERATURE [°C] | BATTERY CAPACITANCE DENSITY [Wh/L] | | |
| --- | --- | --- | --- |
| | ○○○ | △△△ | □□□ |
| -25 | 250 | 170 | 320 |
| 0 | 340 | 230 | 280 |
| 25 | 420 | 380 | 260 |
| 75 | 380 | 460 | 220 |

521

531

532    533    534

| TABLE LABEL | TABLE CAPTION | IN-TABLE TEXT | | |
| --- | --- | --- | --- | --- |
| TABLE 1 | CAPACITANCE CHANGE OF EACH SEPARATOR MATERIAL UNDER HIGH TEMPERATURE AND LOW TEMPERATURE ENVIRONMENTS | TEXT | ROW | COLUMN |
| | | TEMPERATURE [°C] | 0-1 | 0 |
| | | BATTERY... | 0 | 1-3 |
| | | ○○○ | 1 | 1 |
| | | △△△ | 1 | 2 |
| TABLE 2 | ... | ... | | |

# FIG. 8

CHART LABEL／CAPTION ROW
DETERMINATION PROCESSING  /‾ 600

```
┌─────────────────────────────────┐
│             START               │
└─────────────────────────────────┘
                │
                ▼
┌─────────────────────────────────┐  /‾ 601
│       ACQUIRE AREA OF TEXT       │
└─────────────────────────────────┘
                │
                ▼
┌─────────────────────────────────┐  /‾ 602
│       ACQUIRE AREA OF TEXT       │
└─────────────────────────────────┘
                │
                ▼
┌─────────────────────────────────┐  /‾ 603
│       CALCULATE DISTANCE         │
│         TO CHART AREA            │
└─────────────────────────────────┘
                │
                ▼
           IS DISTANCE              /‾ 604
    EQUAL TO OR LESS THAN    ──────── No
          THRESHOLD?
                │
              Yes
                │
                ▼
         DOES TEXT LINE             /‾ 605
       MATCH PATTERN?       ──────── No
                │
              Yes
                │
                ▼
┌─────────────────────────────────┐  /‾ 606
│       OUTPUT LABEL AND           │
│       CAPTION OF CHART           │
└─────────────────────────────────┘
                │
                ▼
┌─────────────────────────────────┐
│             END                 │
└─────────────────────────────────┘
```

# FIG. 9

611

...
AS DESCRIBED ABOVE, WHEN SELECTING A SEPARATOR
MATERIAL, IT IS IMPORTANT TO EVALUATE THE LIFE SPAN
ACCORDING TO ACTUAL USE ENVIRONMENTS.
SUBSEQUENTLY, IN EXPERIMENT 2, THE PERFORMANCES OF
EACH SEPARATOR MATERIAL UNDER HIGH TEMPERATURE AND
LOW TEMPERATURE ENVIRONMENTS HAVE BEEN STUDIED.
THE RESULTS OF THIS EXPERIMENT ARE SHOWN IN TABLE 1.

612

UPPER LEFT CORNER
COORDINATES
(30, 250)

AT −25°C, □□□ SHOWS THE MOST EXCELLENT FEATURE. THIS
IS LARGELY BECAUSE OF ADOPTING A POROUS FIBER MATERIAL
∗∗ NEWLY DEVELOPED BY A CORPORATIVE RESEARCH WITH
XX COMPANY IN THE U.S. ON THE OTHER HAND, AT 75°C,
□□□ SHOWS A RELATIVELY SIGNIFICANT DETERIORATION
IN PERFORMANCE. THE STUDIES OF APPLICATIONS OF ∗∗ IS IN
AN EARLY STAGE, AND ITS PERFORMANCE WILL BE IMPROVED
IN COOPERATION WITH XX.
FINALLY, IN EXPERIMENT 3, THE FUNCTIONAL STRENGTH
CHARACTERISTICS OF THE SEPARATOR MATERIAL IS STUDIED.
...

614    613

LOWER RIGHT CORNER
COORDINATES
(280, 280)

621    622    623

| TEXT | UPPER LEFT CORNER COORDINATES | LOWER RIGHT CORNER COORDINATES |
|---|---|---|
| AT −25°C, ... | (30, 250) | (280, 280) |
| ... XX COMPANY IN THE U.S. | (32, 285) | (282, 315) |
| FIBER MATERIAL... | (31, 320) | (281, 350) |
| AT 75°C, ... | (31, 355) | (280, 385) |

# FIG. 10

# FIG. 11

700

BODY TEXT PARAGRAPH DIVISION PROCESSING

**START**

↓

701

ACQUIRE AREAS OF CURRENT LINE AND IMMEDIATELY PRECEDING LINE

↓

702

CALCULATE DISTANCE BETWEEN CURRENT LINE AND IMMEDIATELY PRECEDING LINE

↓

703

IS DISTANCE EQUAL TO OR LESS THAN THRESHOLD? — No

↓ Yes

704

COMPARE LEFT AND RIGHT END COORDINATES OF CURRENT LINE AND IMMEDIATELY PRECEDING LINE

↓

705

ARE LEFT AND RIGHT END COORDINATES EQUAL? — Yes

↓ No

706

ARE RIGHT END COORDINATES EQUAL? — Yes

↓ No

707

ARE LEFT END COORDINATES EQUAL? — Yes

↓ No

708

START NEW PARAGRAPH FROM CURRENT LINE

709

IS IMMEDIATELY PRECEDING LINE HEAD LINE OF PARAGRAPH? — Yes

↓ No

710

COMPARE RIGHT END COORDINATES OF LINE BEFORE PREVIOUS LINE AND IMMEDIATELY PRECEDING LINE

↓

711

ARE RIGHT END COORDINATES EQUAL? — No

↓ Yes

712

ADD CURRENT LINE TO PARAGRAPH

**END**

# FIG. 12

WORD TABLE CREATION PROCESSING (A) — 800

START

ACQUIRE INPUT TEXT — 801

DIVIDE WORDS — 802

EXTRACT
IMPORTANT WORDS — 803

CREATE WORD TABLE — 804

REMOVE
OVERLAPPING WORDS — 805

STORE WORD TABLE — 806

END

# FIG. 13

811

SUBSEQUENTLY, DIMENSION ERRORS (UNIT: mm)
OF PART MANUFACTURED BY DEVICE NEWLY
INTRODUCED IN YEAR OF 2019 ARE SHOWN
IN TABLE.

813     814     815

| REPRESENTATIVE FORM | PART OF SPEECH | TYPE |
|---|---|---|
| CONTINUE | VERB | - |
| 2019 | NOUN | NUMERICAL VALUE |
| YEAR | SUFFIX | UNIT |
| NEW | ADJECTIVE | - |
| INTRODUCE | NOUN | - |
| MANUFACTURE | NOUN | - |
| PART | NOUN | - |
| DIMENSION | NOUN | - |
| ERROR | NOUN | - |
| UNIT | NOUN | - |
| mm | NOUN | UNIT |
| TABLE | NOUN | - |
| SHOW | VERB | - |

WORD TABLE (A)

812

# FIG. 14

WORD TABLE CREATION PROCESSING (B) — 900

```
        START

  EXTRACT CHART TEXT        901

     DIVIDE WORDS           902

       EXTRACT
   IMPORTANT WORDS          903

  CREATE WORD TABLE         904

       REMOVE
  OVERLAPPING WORDS         905

   STORE WORD TABLE         906

         END
```

# FIG. 15

521

| INSPECTION POINT | ALTITUDE [m] | RATIO OF TREES [%] | | |
|---|---|---|---|---|
| | | BEECH TREE | SPRUCE | PINE |
| A | 37 | 37.9 | 12.1 | 5.9 |
| B | 579 | 23.6 | 18.0 | 15.4 |
| C | 1,237 | 17.1 | 26.1 | 42.8 |

913　914　915　916　917

| REPRESENTATIVE FORM | PART OF SPEECH | TYPE | ROW | COLUMN |
|---|---|---|---|---|
| INSPECTION | NOUN | - | 0-1 | 0 |
| POINT | NOUN | - | 0-1 | 0 |
| ALTITUDE | NOUN | - | 0 | 1 |
| m | NOUN | UNIT | 0 | 1 |
| TREE | NOUN | - | 0 | 2-4 |
| RATIO | ADVERB | - | 0 | 2-4 |
| % | SPECIFIC | UNIT | 0 | 2-4 |
| BEECH TREE | NOUN | - | 1 | 2 |
| SPRUCE | NOUN | - | 1 | 3 |
| PINE | NOUN | - | 1 | 4 |
| 37 | NOUN | NUMERICAL VALUE | 1 | 1 |
| 37.9 | NOUN | NUMERICAL VALUE | 1 | 2 |
| 12.1 | NOUN | NUMERICAL VALUE | 1 | 3 |

WORD TABLE (B)

912

# FIG. 16

1000

SCORE CALCULATION PROCESSING
OF EACH SENTENCE

START

ACQUIRE TARGET SENTENCE
OF SCORE CALCULATION — 1001

CREATE WORD TABLE (A)
OF SENTENCE — 800

CREATE WORD TABLE (B)
OF TARGET CHART — 900

CREATE WORD TABLE (C) FROM
WORDS INCLUDED IN BOTH A AND B — 1002

CALCULATE SCORE OF EACH WORD
IN WORD TABLE (C) — 1003

SUM SCORES OF ENTIRE WORDS — 1004

END

# FIG. 17

521

| INSPECTION POINT | ALTITUDE [m] | RATIO OF TREES [%] | | |
|---|---|---|---|---|
| | | BEECH TREE | SPRUCE | PINE |
| A | 137 | 37.9 | 12.1 | 5.9 |
| B | 579 | 23.6 | 18.0 | 15.4 |
| C | 1,237 | 17.1 | 26.1 | 42.8 |

811

LARGE SPARSE WOODS OF BEECH TREES ARE FOUND AT INSPECTION POINT A AT ALTITUDE OF 137m.

813 814 815

| REPRESENTATIVE FORM | PART OF SPEECH | TYPE |
|---|---|---|
| ALTITUDE | NOUN | - |
| 137 | NOUN | NUMERICAL VALUE |
| m | NOUN | UNIT |
| INSPECTION | NOUN | - |
| POINT | NOUN | - |
| BEECH TREE | NOUN | - |
| SPARSE | ADJECTIVE | - |
| WOOD | NOUN | - |
| LARGE | ADJECTIVE | - |
| FIND | VERB | - |

WORD TABLE (A)
812

913 914 915 916 917

| REPRESENTATIVE FORM | PART OF SPEECH | TYPE | ROW | COLUMN |
|---|---|---|---|---|
| INSPECTION | NOUN | - | 0-1 | 0 |
| POINT | NOUN | - | 0-1 | 0 |
| ALTITUDE | NOUN | - | 0 | 1 |
| m | NOUN | UNIT | 0 | 1 |
| TREE | NOUN | - | 0 | 2-4 |
| RATIO | ADVERB | - | 0 | 2-4 |
| % | SPECIFIC | UNIT | 0 | 2-4 |
| BEECH TREE | NOUN | - | 1 | 2 |
| SPRUCE | NOUN | - | 1 | 3 |
| PINE | NOUN | - | 1 | 4 |
| 137 | NOUN | NUMERICAL VALUE | 1 | 1 |
| 37.9 | NOUN | NUMERICAL VALUE | 1 | 2 |
| 12.1 | NOUN | NUMERICAL VALUE | 1 | 3 |

WORD TABLE (B)
912

1032 1033 1034 1035 1036

| REPRESENTATIVE FORM | PART OF SPEECH | TYPE | ROW | COLUMN |
|---|---|---|---|---|
| ALTITUDE | NOUN | - | 0 | 1 |
| 137 | NOUN | NUMERICAL VALUE | 1 | 1 |
| m | NOUN | UNIT | 0 | 1 |
| INSPECTION | NOUN | - | 0-1 | 0 |
| POINT | NOUN | - | 0-1 | 0 |
| BEECH TREE | NOUN | - | 1 | 2 |

WORD TABLE (C)
1031

# FIG. 18

|  | 1032 | 1033 | 1034 | 1035 | 1036 |
|---|---|---|---|---|---|

| REPRESENTATIVE FORM | PART OF SPEECH | TYPE | ROW | COLUMN |
|---|---|---|---|---|
| ALTITUDE | NOUN | - | 0 | 1 |
| 137 | NOUN | NUMERICAL VALUE | 1 | 1 |
| m | NOUN | UNIT | 0 | 1 |
| INSPECTION | NOUN | - | 0-1 | 0 |
| POINT | NOUN | - | 0-1 | 0 |
| BEECH TREE | NOUN | - | 1 | 2 |

UNIT OF HEADER CELL (HEADER ROW) +NUMERICAL VALUE OF DATA CELL (OTHER THAN HEADER ROW) ⇒SCORE 2.5 TIMES

WORD TABLE (C)

1031

1041

| | | HEADER CELL (ROW=0) | | | | | | DATA CELL (ROW>0) | | | | | |
|---|---|---|---|---|---|---|---|---|---|---|---|---|---|
| | | UNIT | | | OTHERS | | | NUMERICAL VALUE | | | OTHERS | | |
| | | IN SAME ROW | IN SAME COLUMN | OTHERS | IN SAME ROW | IN SAME COLUMN | OTHERS | IN SAME ROW | IN SAME COLUMN | OTHERS | IN SAME ROW | IN SAME COLUMN | OTHERS |
| HEADER CELL (ROW=0) | UNIT | - | - | - | ×1.5 | ×1.5 | ×1.5 | - | ×2.5 | ×2 | - | ×2 | ×1.5 |
| | OTHERS | ×1.5 | ×1.5 | ×1.5 | ×1 | ×1 | ×1 | - | ×2 | ×1.5 | - | ×1.5 | ×1 |
| DATA CELL (ROW>0) | NUMERICAL VALUE | - | ×2.5 | ×2 | - | ×2 | ×1.5 | ×1.75 | ×1.75 | ×1.5 | ×1.5 | ×1.5 | ×1.25 |
| | OTHERS | - | ×2 | ×1.5 | - | ×1.5 | ×1 | ×1.25 | ×1.25 | ×1.25 | ×1 | ×1 | ×1 |

SCORE TABLE

# FIG. 19

1100
EXTRACTION TARGET SENTENCE
DETERMINATION PROCESSING

START

1101
IS LENGTH
OF PARAGRAPH EQUAL TO
OR GREATER THAN
THRESHOLD? —— Yes ——>

1106
LIST SENTENCES HAVING SCORE
EQUAL TO OR GREATER THAN
THRESHOLD IN PARAGRAPH

No

1102
ACQUIRE HIGHEST SCORE OF
SENTENCE IN PARAGRAPH

1107
SELECT LISTED SENTENCES
AS EXPLANATORY SENTENCES

1103
IS HIGHEST
SCORE EQUAL TO OR GREATER
THAN THRESHOLD?

No

1108
SELECT SENTENCE BETWEEN
LISTED SENTENCES AS
EXPLANATORY SENTENCE

Yes

1104
SELECT ENTIRE PARAGRAPH
AS EXPLANATORY SENTENCES

1105
OUTPUT SELECTED SENTENCES
IN ORDER IN DOCUMENT

END

# FIG. 20

611

...
AS DESCRIBED ABOVE, WHEN SELECTING A SEPARATOR
MATERIAL, IT IS IMPORTANT TO EVALUATE THE LIFE SPAN
ACCORDING TO ACTUAL USE ENVIRONMENTS.
SUBSEQUENTLY, IN EXPERIMENT 2, THE PERFORMANCES OF
EACH SEPARATOR MATERIAL UNDER HIGH TEMPERATURE AND
LOW TEMPERATURE ENVIRONMENTS HAVE BEEN STUDIED.
THE RESULTS OF THIS EXPERIMENT ARE SHOWN IN TABLE 1.

1122

AT −25°C, □□□ SHOWS THE MOST EXCELLENT FEATURE. THIS
IS LARGELY BECAUSE OF ADOPTING A POROUS FIBER MATERIAL
∗∗ NEWLY DEVELOPED BY A CORPORATIVE RESEARCH WITH
XX COMPANY IN THE U.S. ON THE OTHER HAND, AT 75°C,
□□□ SHOWS A RELATIVELY SIGNIFICANT DETERIORATION
IN PERFORMANCE. THE STUDIES OF APPLICATIONS OF ∗∗ IS IN
AN EARLY STAGE, AND ITS PERFORMANCE WILL BE IMPROVED
IN COOPERATION WITH XX.

FINALLY, IN EXPERIMENT 3, THE FUNCTIONAL STRENGTH
CHARACTERISTICS OF THE SEPARATOR MATERIAL IS STUDIED.
...

THRESHOLD＝70.0

1123

| AT −25°C, □□□ SHOWS THE MOST EXCELLENT FEATURE. | 76.2 |

1124

| THIS IS LARGELY BECAUSE OF ADOPTING A POROUS FIBER MATERIAL ∗∗ NEWLY DEVELOPED BY A CORPORATIVE RESEARCH WITH XX COMPANY IN THE U.S. | 35.9 |

1125

| ON THE OTHER HAND, AT 75°C, □□□ SHOWS A RELATIVELY SIGNIFICANT DETERIORATION IN PERFORMANCE. | 87.2 |

1126

| THE STUDIES OF APPLICATIONS OF ∗∗ IS IN AN EARLY STAGE, AND ITS PERFORMANCE WILL BE IMPROVED IN COOPERATION WITH XX. | 41.2 |

OUTPUT AS
EXPLANATORY
SENTENCES

PARAGRAPH

## INTERNATIONAL SEARCH REPORT

| International application No. |
| --- |
| PCT/JP2021/016579 |

### A. CLASSIFICATION OF SUBJECT MATTER
G06F 40/169(2020.01)i; G06F 40/279(2020.01)i
FI: G06F40/279; G06F40/169

According to International Patent Classification (IPC) or to both national classification and IPC

### B. FIELDS SEARCHED

Minimum documentation searched (classification system followed by classification symbols)
G06F40/00-40/58; G06T7/00-7/90

| Documentation searched other than minimum documentation to the extent that such documents are included in the fields searched | |
| --- | --- |
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | 水野浩之 他2名，単語の出現密度分布と偏出度を用いた図表と説明テキストの対応付け，情報処理学会論文誌, 15 December 1999, vol. 40, no. 12, pp. 4400-4403, page 4400, right column, line 4 to page 4402, left column, line 1, (MIZUNO, Hiroyuki et al., "Linking Figures and Tables to Their Expository Texts Using Word Density Distributions and Their Biases", Transactions of Information Processing Society of Japan) | 1-4, 6-8, 10-11, 13, 15 |
| A | | 5, 9, 12, 14 |
| A | 篠田広人 他3名，論文中の図表と本文の自動対応付け，一般社団法人人工知能学会第32回全国大会論文集 DVD[DVD-ROM], 05 June 2018, entire text, all drawings, (SHINODA, Hiroto et al., "Automatic alignment of figures and tables with texts in scientific literatures", Proceedings of the 32nd Annual Conference of the Japanese Society for Artificial Intelligence DVD[DVD-ROM]) | 1-15 |

☒ Further documents are listed in the continuation of Box C.  ☒ See patent family annex.

| | | |
| --- | --- | --- |
| * | Special categories of cited documents: | |
| "A" | document defining the general state of the art which is not considered to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 07 July 2021 (07.07.2021) | 20 July 2021 (20.07.2021) |

| Name and mailing address of the ISA/ | Authorized officer |
| --- | --- |
| Japan Patent Office<br>3-4-3, Kasumigaseki, Chiyoda-ku,<br>Tokyo 100-8915, Japan | Telephone No. |

Form PCT/ISA/210 (second sheet) (January 2015)

31

**INTERNATIONAL SEARCH REPORT**

| International application No. |
| --- |
| PCT/JP2021/016579 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2013-152564 A (CANON INC.) 08 August 2013 (2013-08-08) in particular, paragraphs [0065]-[0069] | 1-15 |

Form PCT/ISA/210 (continuation of second sheet) (January 2015)

| INTERNATIONAL SEARCH REPORT | | International application No. |
|---|---|---|
| Information on patent family members | | PCT/JP2021/016579 |

| Patent Documents referred in the Report | Publication Date | Patent Family | Publication Date |
|---|---|---|---|
| JP 2013-152564 A | 08 Aug. 2013 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003346161 A